# EUROPÄISCHE PATENTSCHRIFT

(11) **EP 1 488 967 B1**
(45) Veröffentlichungstag und Bekanntmachung des Hinweises auf die Patenterteilung: **23.08.2006**
(21) Anmeldenummer: 04090237.1
(22) Anmeldetag: 16.06.2004
(51) Int. Cl.: B60R 22/20, B60R 22/26, B60N 2/08

(54) **Sicherheitseinrichtung zur Verriegelung einer Sitzlängsverstellung, insbesondere bei Integralgurtsystemen**
Safety device for locking in position a longitudinally adjustable seat equiped with an integral safety belt device
Dispositif de sécurité pour le blocage d'un siège réglable en longueur, le siège étant équipé d'un système intégral de ceinture de sécurité

(30) Priorität: 17.06.2003 DE 10327710
(43) Veröffentlichungstag der Anmeldung: 22.12.2004
(73) Patentinhaber: Volkswagen Aktiengesellschaft, 38436 Wolfsburg (DE)
(72) Erfinder: Rohlfing, Hans, 38108 Braunschweig (DE); von Kornatzki, Alexander, 38108 Braunschweig (DE)
(74) Vertreter: Schneider, Henry

(56) Entgegenhaltungen:
- EP-A- 1 078 828
- DE-A1- 3 837 170
- DE-A1- 4 123 102

## Beschreibung

Die Erfindung betrifft eine Sicherheitseinrichtung zur Verriegelung einer Sitzlängsverstellung, insbesondere bei Integralgurtsystemen, mit den im Oberbegriff des Anspruchs 1 genannten Merkmalen.

Es ist bekannt eine Sitzlängsverstellung eines Kraftfahrzeugsitzes in einem Kraftfahrzeug vor und während der Fahrt zu ermöglichen, da die Insassen durch ein Gurtsystem gesichert sind, bei denen die Gurte zumeist an einem Anlenkpunkt am Sitzteil und Anlenkpunkten an einer Karosserie, zumeist einer Dachsäule, angebracht sind. Die Sitzlängsverstellung funktioniert bei dieser Ausführung des Sicherheitsgurtsystems unabhängig davon, ob sich das Kraftfahrzeug im Stillstand oder in der Fahrt befindet.

Als System zur Insassensicherheit ist es aus der EP 1078828 bekannt, eine Abfrage einer Gurtschlossverriegelung über einen Mikroschalter durchzuführen, der durch einen Auswerfer mit Hilfe eines daran befindlichen Auslösers betätigt wird, wenn eine Gurtzunge in ein Gurtschloss eingesteckt und dort verriegelt wird. Mit der Auswertung des durch den Mikroschalter erzeugten Signals, kann die Aktivierung und Einstellung verschiedener Sicherheitskomponenten im Fahrzeug erfolgen.

Als Sicherheitskomponente ist beispielsweise die Aktivierung eines Gurtstraffers des Sicherheitsgurtsystems oder die Aktivierung und Erzeugung eines Warnsignals vorgesehen, wenn beispielsweise beim Start des Kraftfahrzeuges der Sicherheitsgurt nicht angelegt ist. Ist der Sicherheitsgurt angelegt, so ist eine Verriegelung der Sitzlängsverstellung des Kraftfahrzeugsitzes möglich, so dass der Fahrzeuginsasse im Crash-Fall durch das Gurtsystem geschützt ist. Die Ausführung per Mikroschalter ist jedoch sehr aufwendig und ist bei einem Defekt des Mirkoschalters oder eines angeschlossenen Systems zur Weiterleitung der Information sofort unbrauchbar.

Bei Integralgurtsystemen, bei denen eine Sicherung der Passagiere durch eine Gurtführung nicht an den Anlenkpunkten der Dachsäule beziehungsweise an der Karosserie, sondern durch eine Befestigung der Gurte direkt am Kraftfahrzeugsitz ausgeführt ist, ist es noch mehr als bei herkömmlichen Gurtsystemen von besonderer Wichtigkeit, dass die Passagiere durch geeignete Sicherheitskomponenten darauf hingewiesen werden, dass der Sicherheitsgurt nicht angelegt ist und eine Sitzlängsverstellung während der Fahrt nicht ermöglicht wird. Die Signalisierung erfolgt bekanntermaßen wie bei herkömmlichen Sicherheitsgurtsystemen durch Zeichen im Cockpit des Kraftfahrzeuges, bekannte akustische Warnsignale oder sogar über gesprochene Ansagen und dergleichen.

Bei Integralgurtsystemen ist es deswegen von entscheidender Bedeutung, dass eine Sitzlängsverstellung während der Fahrt - also im angeschnallten Zustand - nicht durchführbar sein soll, weil der Kraftfluss zur Aufnahme der Gurtkräfte ausschließlich über die Sitzstruktur und eine geeignete Anbindung der Sitze selbst in die Karosserie des Kraftfahrzeuges verläuft. Aus sicherheitstechnischen Gründen muss verhindert werden, dass die Sitzlängsverstellung im Fahrbetrieb aktiviert werden kann.

Eine bekannte Lösung zur Verhinderung einer Sitzlängsverstellung ist eine Sitzverriegelung eines mit einem Integralgurtsystem ausgestatteten Kraftfahrzeugsitzes durch einen in der Sitzfläche, durch ein abnehmbares Teil verdeckt, angeordneten Griff zu aktivieren beziehungsweise zu deaktivieren, um eine Sitzlängsverstellung nur im aktivierten Zustand zu ermöglichen. Diese Lösung stellt aber gerade dann ein ziemliches Problem dar, wenn beispielsweise eine andere Funktion eines Sitzes oder einer Sitzbank durchgeführt wird, bei der mit einfachen Handgriffen der Sitz beziehungsweise die Rücksitzbank in unterschiedliche Positionen gebracht werden soll. Grundsätzlich muss dann zunächst die Sitzverriegelung über den angeordneten Griff betätigt werden, was für den Fahrzeugnutzer nicht komfortabel ist. Bei dieser Lösung ist außerdem nicht sichergestellt, dass die Passagiere im angeschnallten Zustand über den angeordneten Griff trotzdem die Sitzverriegelung aktivieren und eine Sitzlängsverstellung durchführen, wie sie jedoch gerade bei Integralgurtsystemen aus sicherheitstechnischen Gründen, wegen des Verlustes des Kraftflusses in die Karosserie, verhindert werden soll.

Notwendigerweise ist zur Aufhebung dieses Nachteiles, nämlich dass das Integralgurtsystem unabhängig von der bekannten Sitzverriegelung wirkt, die Aufgabe der Erfindung, eine Verriegelungs- und Entriegelungsposition eines Sicherheitselementes für Sicherheitsgurtsysteme zu finden, die für herkömmliche Systeme und insbesondere auch für ein Integralgurtsystem eines Kraftfahrzeugsitzes einsetzbar sind, um eine Sitzlängsverstellung eines Kraftfahrzeugsitzes nur in der entriegelten Position des Sicherheitselementes zu ermöglichen.

DE 4123102 offenbart eine Sicherheitseinrichtung mit den Merkmalen des Oberbegriffs des unabhängigen Anspruchs 1.

Diese Aufgabe wird durch eine Sicherheitseinrichtung mit den im Anspruch 1 genannten Merkmalen gelöst. Dadurch, dass in einer Gebrauchsstellung einer Gurtschlossverriegelung eines Sicherheitsgurtsystems eine Verriegelung einer Sitzlängsverstelleinrichtung bewirkbar ist, wird vorteilhaft sichergestellt, dass ein angeschnallter Benutzer keine Sitzlängsverstellung während der Fahrt vornimmt, da die Sitzlängsverstellung in Gebrauchsstellung zwangsweise verriegelt ist.

Das Sicherheitsgurtsystem kann dabei ein Integralgurtsystem oder auch ein herkömmliches Sicherheitsgurtsystem sein. Die Systeme unterscheiden sich darin, dass eine erste Gurtanbindung, zumeist seitlich des Kraftfahrzeugsitzes als Gurtschlossverriegelung ausgeführt, verbunden ist und eine andere Anbindung mittels eines Brustgurtes und eines Beckengurtes an der anderen Seite des Sicherheitsgurtsystems entweder bei einem Integralgurtsystem ebenfalls nur mit dem Kraftfahrzeugsitz oder bei einem herkömmlichen System mindestens an Anlenkpunkten mit der Karosserie (zumeist einer B-Säule) verbunden ist. Die erfindungsgemäße Sicherheitseinrichtung ist grundsätzlich unabhängig vom vorhandenen Sicherheitsgurtsystem einsetzbar.

Die Gurtschlossverriegelung umfasst dabei mindestens ein Gurtschloss und mindestens eine Gurtzunge, wobei das Gurtschloss über ein Befestigungselement in geeigneter Weise am Kraftfahrzeugsitz angeordnet ist.

In bevorzugter Ausgestaltung der Erfindung ist das Befestigungselement ein um seine Achse drehbares stangenartiges Element oder dergleichen, mit dem das Gurtschloss, vorzugsweise über einen Abstandshalter verbunden ist. Das stangenartige Element steht zudem in geeigneter Weise mit dem Kraftfahrzeugsitz innerhalb der Unterkonstruktion des Kraftfahrzeugsitzes in Verbindung. Vorzugsweise ist das stangenartige Element im Bereich des Zusammentreffens von Rückenlehnenteilunterkante und hinterer Sitzteilkante angeordnet

Die Sitzlängsverstelleinrichtung weist bevorzugt mindestens eine Schiene auf, wobei die Schiene von einem Aufnahmeelement umgriffen wird, deren Öffnungen oberhalb der Schiene das mindestens eine stangenartige Element aufnehmen. Die Schiene dient lediglich zur Freigabe der eigentlichen Sitzlängsverstelleinrichtung. Die Schiene ist mit einem Griff ausgestattet der vorzugsweise unterhalb des Sitzes herausragt und in und entgegen der Fahrtrichtung horizontal bewegbar angeordnet ist. Diese Bewegung der Schiene über den Griff dient lediglich zur Freigabe der Sitzlängsverstelleinrichtung des Kraftfahrzeugsitzes und kann auch so angeordnet sein, dass eine nicht horizontale Bewegung mit gleicher Wirkung durchführbar ist.

In bevorzugter Ausgestaltung der Erfindung weist das stangenartige Element ein Verriegelungselement vorzugsweise in Form einer Sperrklinke auf, welche in einer Gebrauchsstellung des Sicherheitsgurtsystems in die Schiene eingreift. Die Sperrklinke greift in Nichtgebrauchsstellung des Sicherheitsgurtsystems demzufolge nicht in die Schiene ein.

Durch diese erfindungsgemäße Lösung ist die Sitzlängsverstelleinrichtung somit direkt mit einem Sicherheitssystem verbunden, nämlich dem Sicherheitsgurtsystem. Nutzt eine Person die Sitzlängsverstelleinrichtung in unangeschalltem Zustand, während des Stillstandes des Kraftfahrzeuges, ist die Sperrklinke nicht in einer Ausnehmung der Schiene eingerastet.

Nimmt ein Fahrzeugführer das Fahrzeug in Betrieb, wird er durch vorhandene bekannte Sicherheitseinrichtungen darauf aufmerksam gemacht, sich anzuschnallen, also das vorhandene Sicherheitsgurtsystem zu benutzen. Mit diesem Vorgang bringt der Fahrzeugführer sich und selbstverständlich alle Insassen des Kraftfahrzeuges, die sich ebenfalls anschnallen, vor unfallbedingten Wirkungen in Sicherheit. Durch Einstecken der Gurtzunge in das Gurtschloss und somit der Überführung der Gurtschlossverriegelung von einer Nichtgebrauchsstellung in eine Gebrauchsstellung dreht sich das stangenartige Element auf seiner Achse. Die Gebrauchsstellung der Gurtschlossverriegelung führt somit gleichzeitig zur erfindungsgemäßen Verriegelung der Sitzlängsverstelleinrichtung, da sich das Verriegelungselement durch Drehung des stangenartigen Elementes mitdreht und in die Ausnehmung der Schiene einklinkt. In vorteilhafter Weise sind nunmehr zur Sicherung einer Nichtbedienung der Sitzlängsverstellung keine weiteren Maßnahmen mehr notwendig.

Da die Sicherheitseinrichtung an einem Einzelsitz und an Sitzbänken durch Verlängerung des stangenartigen Elementes und Anordnung mehrerer Gurtschlösser beliebig erweiterbar ist, eignet sich die Sicherheitseinrichtung nicht nur für Personenkraftwagen, sondern insbesondere auch für Fahrzeuge mit mehreren beispielsweise zwei, drei oder mehr Sitzreihen, die zumeist mit Sitzbänken im Fondbereich ausgestattet sind. Überhaupt ist eine Anwendung nicht auf Kraftfahrzeuge beschränkt. Die Anordnung von Integralgurtsystemen ermöglicht eine hohe Flexibilität bei der Verstellung und Umpositionierung von Einzelsitzen und/oder Sitzbänken.

Die erfindungsgemäße Lösung macht die Sicherheitseinrichtung unabhängig vom jeweiligen Sicherheitsgurtsystem. Bei Integralgurtsystemen ist die Lösung auch einsetzbar, ohne dass das Sicherheitsgurtsystem eine Anbindung an eine Karosserie aufweist, wobei durch diese Lösung sichergestellt ist, dass der oder die Fahrzeuginsassen keine fehlerhaften Eingriffe in das Sicherheitskonzept des Kraftfahrzeuges vornimmt oder vornehmen. Die Sicherheitseinrichtung ist bei herkömmlichen Sicherheitsgurtsystemen ebenfalls vorteilhaft einsetzbar. Zudem ist diese Lösung für den Bediener sehr komfortabel, einfach und kostengünstig.

Die genaue Position der Gurtschlossverriegelung zur Verriegelung der Sitzlängsverstelleinrichtung in Gebrauchsstellung des Sicherheitsgurtsystems ist in bevorzugter Ausgestaltung der Erfindung vorgebbar, so dass in Gebrauchsstellung die Gurtschlossverriegelung eine Position einnimmt, bei der die Gurtschlossverriegelung aus dem Sitzteil und/oder dem Rückenlehnenteil des Kraftfahrzeugsitzes in einem bestimmten Abstand weit oder weniger weit herausragt.

In bevorzugter Ausgestaltung ist die Gurtschlossverriegelung in Nichtgebrauchsstellung bei einer Ausführung als Integralgurtsystem oder einem herkömmlichen Gurtsystem entsprechend im oder am Sitzteil und/oder Rückenlehnenteil des Kraftfahrzeugsitzes versenkbar angeordnet.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: eine Sicherheitseinrichtung in Nichtgebrauchsstellung einer Gurtschlossverriegelung eines Sicherheitsgurtsystems;
- Figur 2: die Sicherheitseinrichtung in Gebrauchsstellung der Gurtschlossverriegelung des Sicherheitsgurtsystems;
- Figur 3: eine perspektivische Ansicht eines Kraftfahrzeugsitzes, insbesondere ein Rückenlehnenteil und ein Sitzteil in Nichtgebrauchsstellung der Gurtschlossverriegelung und
- Figur 4: eine perspektivische Ansicht eines Kraftfahrzeugsitzes, insbesondere ein Rückenlehnenteil und ein Sitzteil in Gebrauchsstellung der Gurtschlossverriegelung.

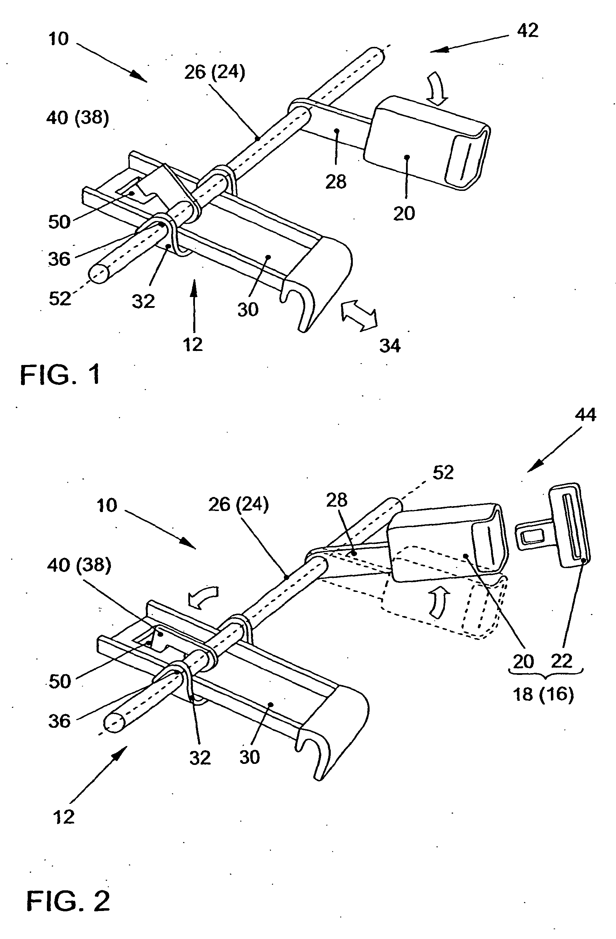

Figur 1 zeigt in einem Ausführungsbeispiel die Sicherheitseinrichtung 10 und einen Teil der Sitzlängsverstelleinrichtung 12. Ein in Figur 1 nicht dargestellter Kraftfahrzeugsitz 14, der in bekannter Weise ein Sitzteil 46 und ein Rückenlehnenteil 48 (in Figur 1 und 2 nicht sichtbar) umfasst, ist auf einem Schienensystem (nicht dargestellt) oder dergleichen in einer Fahrtrichtung 34 längsverschieblich angeordnet. Eine Schiene 30 mit einem frontseitig angeordneten Griff, die zur Sitzlängsverstelleinrichtung 12 gehört, dient bei Bewegung in Fahrtrichtung 34 zur Freigabe des Schienensystems.

Figur 1 zeigt ferner ein Gurtschloss 20 in Nichtgebrauchsstellung 42, bei der eine Gurtzunge 22 (Figur 2) nicht in das Gurtschloss 20 eingreift. Gurtschloss 20 und Gurtzunge 22 bilden eine Gurtschlossverriegelung 18 aus. Die Gurtschlossverriegelung 18 ist Teil eines nicht näher dargestellten Sicherheitsgurtsystems 16. Das Sicherheitsgurtsystem 16 kann dabei ein Integralgurtsystem oder ein herkömmliches Gurtsystem sein. Das Gurtschloss 20 ist über einen Abstandshalter 28 oder dergleichen an einem Befestigungselement 24 angeordnet, welches im Ausführungsbeispiel als ein stangenartiges Element 26 ausgeführt ist. Das stangenartige Element 26 ist in einem Aufnahmeelement 32 in angeordneten Öffnungen 36 angeordnet und geführt. Ein Verriegelungselement 38, im Ausführungsbeispiel als Sperrklinke 40 dargestellt, ist oberhalb der Schiene 30 angeordnet und in horizontaler Anordnung des Gurtschlosses 20 in einem vorgebbaren Winkel auf dem stangenartigen Element 26, von einer horizontalen Ebene abweichend, angeordnet. Die Sperrklinke 40 weist eine Art Nase auf, die mit einer Ausnehmung 50 der Schiene 30 korrespondiert und unter Drehung des stangenartigen Elementes 26 um eine Achse 52 von der Nichtgebrauchsstellung 42 in eine Gebrauchsstellung 44, wie Figur 2 zeigt, in die Ausnehmung 50 eingreift.

Figur 2 zeigt die Gurtschlossverriegelung 18 in Gebrauchsstellung 44, wobei die in Figur 1 beschriebene Nichtgebrauchsstellung 42 gestrichelt dargestellt ist. In Gebrauchsstellung 44 greift die Gurtzunge 22 in das Gurtschloss 20 ein und verlagert durch Drehung um die Achse 52 das stangenartige Element 26 derart, dass das auf dem stangenartigen Element 26 angeordnete Verriegelungselement 38, die Sperrklinke 40, in die Ausnehmung 50 der Schiene 30 eingreift. Das stangenartige Element 26 ist - wie bereits in Figur 1 beschrieben - im Aufnahmeelement 32 in den Öffnungen 36 oberhalb der Schiene 30 angeordnet.

Wie die Figuren 1 und 2 verdeutlichen ist der Kraftfahrzeugsitz 14 nur entsprechend der in Figur 1 dargestellten Nichtgebrauchsstellung 42 in Fahrtrichtung 34 längsverschieblich verlagerbar, nämlich dann, wenn die Sperrklinke 40 nicht in die Ausnehmung 50 eingreift.

Die Sicherheitseinrichtung 10 ist für herkömmliche und Integralgurt-Sicherheitsgurtsysteme 16 einsetzbar. Bei einem Integralgurtsystem, bei dem beide Anlenkpunkte unabhängig von einer Karosserie am Kraftfahrzeugsitz 14 angeordnet sind, ist beispielsweise das stangenartige Element 26 mit dem Kraftfahrzeugsitz 14 verbunden, so dass eine Längsverschiebung des Kraftfahrzeugsitzes 14 in oder entgegen der Fahrtrichtung 34 in Nichtgebrauchsstellung 42 bei Betätigung der Schiene 30, die zur Freigabe des beispielsweise vorhandenen (nicht dargestellten) Schienensystems zur Sitzlängsverstellung dient, durchführbar ist.

In herkömmlicher Ausführung eines Sicherheitsgurtsystems 16 ist die Sicherheitseinrichtung 10 ebenfalls so anordbar, dass das stangenartige Element 26 mit dem Kraftfahrzeugsitz 14 verbunden ist, wobei Sicherheitsgurtsystem 16 jedoch einerseits an einer Karosserie, beispielsweise an der B-Säule, an mindestens einem Anlenkpunkt, zumeist jedoch einem oberen und einem unteren Anlenkpunkt (hier nicht dargestellt) angebracht ist und andererseits über die Gurtschlossverriegelung 18 am Kraftfahrzeugsitz 14, unter Ausbildung eines Becken- und Brustgurtes, befestigt ist. Der Kraftfahrzeugsitz 14 ist in dem Aufnahmeelement 32 geführt. Das Aufnahmeelement 32 stellt die Verbindung zu der das Schienensystem der Sitzlängsverstellung freigebenden Schiene 30 her.

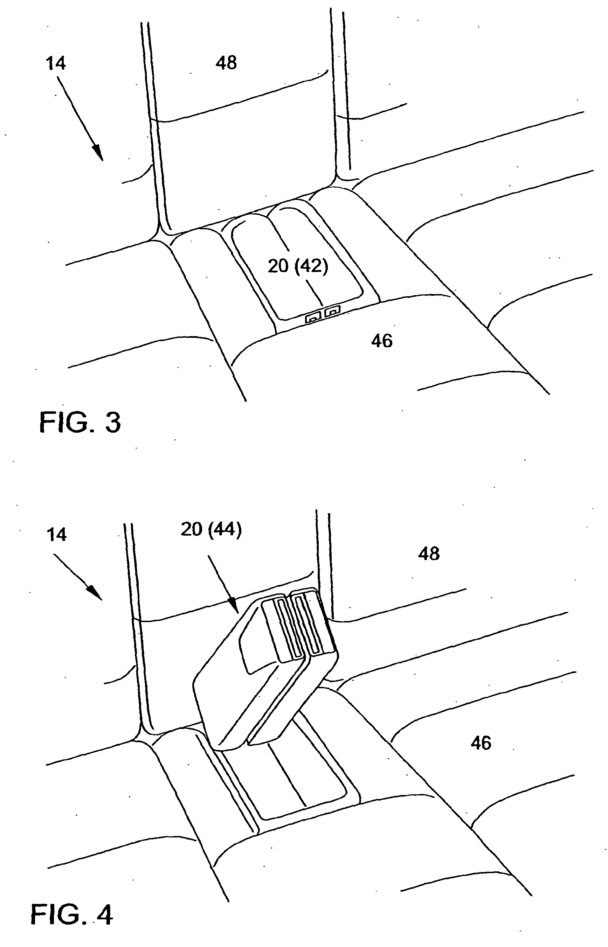

Figur 3 zeigt den Kraftfahrzeugsitz 14 mit dem Sitzteil 46 und dem Rückenlehnenteil 48 in Nichtgebrauchsstellung 42 der Gurtschlossverriegelung 18, wobei Figur 3 selbstverständlich nur das Gurtschloss 20 zeigt. Die Gurtschlossverriegelung 18 ist ohne Absatz in die Sitzfläche des Sitzteiles 46 eingebettet und ist somit störungsfrei angeordnet.

Analog dazu zeigt Figur 4 das Sitzteil 46 und das Rückenlehnenteil 48 des Kraftfahrzeugsitzes 14 mit in seiner Position gegenüber einer gedachten horizontalen Ebene verlagertem Gurtschloss 20 der Gurtschlossverriegelung 18. In dieser gegenüber der horizontalen Ebene verlagerten Position des Gurtschlosses 20, in der in der Praxis die Gurtzunge 22 eingeklinkt wird, ist der Kraftfahrzeugsitz 14 als Einzelsitz oder auch als Rücksitzbank durch Eingriff der Sperrklinke 40 in die Ausnehmung 50 der Schiene 30 verriegelt.

Der Winkel des Gurtschlosses 20 gegenüber der horizontalen Ebene ist wählbar und kann eine Verriegelung je nach gewählter geometrischer Ausbildung von Gurtschloss 20 und Sperrklinke 40 zueinander bewirken. Die Ausbildung kann so wie Figur 4 zeigt erfolgen, dass sich das Gurtschloss 20 sichtbar über die Sitzfläche erhebt. Eine Ausführung, ohne dass sich das Gurtschloss über die Sitzfläche des Sitzteiles 46 erhebt, ist ebenfalls denkbar.

Gleiches gilt für eine Anordnung im Rückenlehnenteil 48.

Figur 3 und 4 zeigen ferner, dass zwei Gurtschlösser 20 nebeneinander angeordnet sind. Beide Gurtschlösser 20 sind erfindungsgemäß auf einem stangenartigen Element 26 angeordnet. Somit wird zwangsweise erreicht, dass beispielsweise die Rücksitzbank gesichert ist, auch wenn nur ein Fondinsasse angeschnallt auf der Rücksitzbank Platz genommen hat. Diese Ausführung auf einem stangenartigen Element ist vorteilhaft, jedoch schließt sie erfindungsgemäß eine getrennte Ausführung nicht aus.

### BEZUGSZEICHENLISTE

- 10: Sicherheitseinrichtung
- 12: Sitzlängsverstelleinrichtung
- 14: Kraftfahrzeugsitz
- 16: Sicherheitsgurtsystem
- 18: Gurtschlossverriegelung
- 20: Gurtschloss
- 22: Gurtzunge
- 24: Befestigungselement
- 26: stangenartiges Element
- 28: Abstandshalter
- 30: Schiene
- 32: Aufnahmeelement
- 34: Fahrtrichtung
- 36: Öffnung
- 38: Verriegelungselement
- 40: Sperrklinke
- 42: Nichtgebrauchsstellung
- 44: Gebrauchsstellung
- 46: Sitzteil
- 48: Rückenlehnenteil
- 50: Ausnehmung
- 52: Achse

## Patentansprüche

1. Sicherheitseinrichtung (10), insbesondere in einem Kraftfahrzeug, die eine Sitzlängsverstelleinrichtung (12) zur Verschiebung mindestens eines Kraftfahrzeugsitzes (14) in oder entgegen der Fahrtrichtung und ein Sicherheitsgurtsystem (16) mit einer Gurtschlossverriegelung (18) umfasst, **dadurch gekennzeichnet, dass** in einer Gebrauchsstellung (44) der Gurtschlossverriegelung (18) des Sicherheitsgurtsystems (16) eine Verriegelung der Sitzlängsverstelleinrichtung (12) bewirkbar ist.

2. Sicherheitseinrichtung nach Anspruch 1, **dadurch gekennzeichnet, dass** die Gurtschlossverriegelung (18) mindestens ein Gurtschloss (20) und mindestens eine Gurtzunge (22) umfasst.

3. Sicherheitseinrichtung nach Anspruch 1 und 2, **dadurch gekennzeichnet, dass** das Sicherheitsgurtsystem (16) einerseits am Kraftfahrzeugsitz (14) und andererseits dessen mindestens eine Gurtschloss (20) über mindestens ein Befestigungselement (24) am Kraftfahrzeugsitz (14) (Integralgurtsystem) angelenkt ist.

4. Sicherheitseinrichtung nach Anspruch 1 und 2, **dadurch gekennzeichnet, dass** das Sicherheitsgurtsystem (16) einerseits an mindestens einem Anlenkpunkt an einer Karosserie und das mindestens eine Gurtschloss (20) andererseits über mindestens ein Befestigungselement (24) am Kraftfahrzeugsitz (14). (herkömmliches Gurtsystem) angeordnet ist.

5. Sicherheitseinrichtung nach Anspruch 3 oder 4, **dadurch gekennzeichnet, dass** das Befestigungselement (24) ein stangenartiges Element (26) ist.

6. Sicherheitseinrichtung nach einem der vorhergehenden Ansprüche, **dadurch gekennzeichnet, dass** das Gurtschloss (20) mit dem auf seiner Achse (52) drehbaren stangenartigen Element (26) vorzugsweise über einen Abstandshalter (28) verbindbar ist.

7. Sicherheitseinrichtung nach einem der vorhergehenden Ansprüche, **dadurch gekennzeichnet, dass** die Sitzlängsverstelleinrichtung (12) mindestens eine Schiene (30) zur Freigabe der Sitzlängsverstelleinrichtung (12) aufweist.

8. Sicherheitseinrichtung nach einem der vorhergehenden Ansprüche, **dadurch gekennzeichnet, dass** der Kraftfahrzeugsitz (14) gemeinsam mit dem mindestens einen Aufnahmeelement (32) und dem in dem einen Aufnahmeelement (32) geführten stangenartigen Element (26) auf der mindestens einen Schiene (30) längs zu einer Fahrtrichtung (34) angeordnet ist.

9. Sicherheitseinrichtung nach Anspruch 8, **dadurch gekennzeichnet, dass** das stangenartige Element (26) oberhalb der Schiene (30) in mindestens einer Öffnung (36) des Aufnahmeelementes (32) quer zur Fahrtrichtung (34) angeordnet ist.

10. Sicherheitseinrichtung nach einem der Ansprüche 8 oder 9, **dadurch gekennzeichnet, dass** im Bereich des Aufnahmeelementes (32) mindestens ein Verriegelungselement (38) auf dem stangenartigen Element (26) starr angeordnet ist.

11. Sicherheitseinrichtung nach einem der vorhergehenden Ansprüche, **dadurch gekennzeichnet, dass** das Verriegelungselement (38) eine Sperrklinke (40) ist.

12. Sicherheitseinrichtung nach Anspruch 11, **dadurch gekennzeichnet, dass** die Sperrklinke (40) in Gebrauchsstellung (44) des Sicherheitsgurtsystems (16) in die Schiene (30) eingreift.

13. Sicherheitseinrichtung nach einem der Ansprüche 11 oder 12, **dadurch gekennzeichnet, dass** die Sperrklinke (40) in Nichtgebrauchsstellung (42) des Sicherheitsgurtsystems (16) (Integralgurtsystem und Gurtsystem) nicht in die Schiene (30) eingreift.

14. Sicherheitseinrichtung nach einem der Ansprüche 5 bis 13, **dadurch gekennzeichnet, dass** die Position, insbesondere ein Winkel, der Gurtschlossverriegelung (18) gegenüber dem stangenartigen Element (26) zur Verriegelung der Sitzlängsverstelleinrichtung (12) vorgebbar ist.

15. Sicherheitseinrichtung nach einem der vorhergehenden Ansprüche, **dadurch gekennzeichnet, dass** in Gebrauchsstellung (44) die Gurtschlossverriegelung (18) eine Position einnimmt, bei der die Gurtschlossverriegelung (18) aus der Fläche des Sitzteiles (46) und/oder des Rückenlehnenteiles (48) des Kraftfahrzeugsitzes (14) ragt.

## Claims

1. Safety device (10), in particular in a motor vehicle, which comprises a seat longitudinal adjustment device (12) for displacing at least one motor vehicle seat (14) in or counter to the direction of travel, and a safety belt system (16) with a belt buckle lock (18), **characterized in that** a locking of the seat longitudinal adjustment device (12) can be brought about in a use position (44) of the belt buckle lock (18) of the safety belt system (16).

2. Safety device according to Claim 1, **characterized in that** the belt buckle lock (18) comprises at least one belt buckle (20) and at least one belt latch (22).

3. Safety device according to Claim 1 and 2, **characterized in that** the safety belt system (16), on the one hand, is coupled to the motor vehicle seat (14) and, on the other hand, at least one belt buckle (20) is coupled to the motor vehicle seat (14) (integral belt system) via at least one fastening element (24).

4. Safety device according to Claim 1 and 2, **characterized in that** the safety belt system (16), on the one hand, is arranged on a vehicle body at at least one coupling point and the at least one belt buckle (20), on the other hand, is arranged on the motor vehicle seat (14) (conventional belt system) via at least one fastening element (24).

5. Safety device according to Claim 3 or 4, **characterized in that** the fastening element (24) is a rod-like element (26).

6. Safety device according to one of the preceding claims, **characterized in that** the belt buckle (20) can be connected, preferably via a spacer (28), to the rod-like element (26) which can be rotated on its axis (52) .

7. Safety device according to one of the preceding claims, **characterized in that** the seat longitudinal adjustment device (12) has at least one rail (30) for releasing the seat longitudinal adjustment device (12).

8. Safety device according to one of the preceding claims, **characterized in that** the motor vehicle seat (14) is arranged together with the at least one receiving element (32) and the rod-like element (26), which is guided in the receiving element (32), on the at least one rail (30) longitudinally with respect to a direction of travel (34).

9. Safety device according to Claim 8, **characterized in that** the rod-like element (26) is arranged above the rail (30) transversely with respect to the direction of travel (34) in at least one opening (36) of the receiving element (32).

10. Safety device according to either of Claims 8 and 9, **characterized in that**, in the region of the receiving element (32), at least one locking element (38) is arranged rigidly on the rod-like element (26).

11. Safety device according to one of the preceding claims, **characterized in that** the locking element (38) is a pawl (40).

12. Safety device according to Claim 11, **characterized in that** the pawl (40) engages in the rail (30) in the use position (44) of the safety belt system (16).

13. Safety device according to either of Claims 11 and 12, **characterized in that** the pawl (40) does not engage in the rail (30) in the not-in-use position (42) of the safety belt system (16) (integral belt system and belt system).

14. Safety device according to one of Claims 5 to 13, **characterized in that** the position, in particular an angle, of the belt buckle lock (18) in relation to the rod-like element (26) for the locking of the seat longitudinal adjustment device (12) can be predetermined.

15. Safety device according to one of the preceding claims, **characterized in that**, in the use position (44), the belt buckle lock (18) assumes a position in which the belt buckle lock (18) protrudes from the surface of the seat part (46) and/or of the backrest part (48) of the motor vehicle seat (14).

## Revendications

1. Dispositif de sécurité (10), notamment dans un véhicule automobile, qui comprend un dispositif de réglage en longueur du siège (12) pour le déplacement d'au moins un siège de véhicule automobile (14) dans le sens de conduite ou dans le sens inverse et un système de ceinture de sécurité (16) avec un verrouillage de boucle de ceinture (18), **caractérisé en ce que** dans une position d'utilisation (44) du verrouillage de boucle de ceinture (18) du système de ceinture de sécurité (16), un verrouillage du dispositif de réglage en longueur du siège (12) peut être effectué.

2. Dispositif de sécurité selon la revendication 1, **caractérisé en ce que** le verrouillage de boucle de ceinture (18) comprend au moins une boucle de ceinture (20) et au moins une languette de ceinture (22).

3. Dispositif de sécurité selon les revendications 1 et 2, **caractérisé en ce que** le système de ceinture de sécurité (16) est articulé d'une part au siège du véhicule automobile (14) et d'autre part son au moins une boucle de ceinture (20) est articulée par le biais d'au moins un élément de fixation (24) au siège du véhicule automobile (14) (système de ceinture intégral).

4. Dispositif de sécurité selon les revendications 1 et 2, **caractérisé en ce que** le système de ceinture de sécurité (16) est disposé d'une part sur au moins un point d'articulation d'une carrosserie et l'au moins une boucle de ceinture (20) est d'autre part disposée par le biais d'au moins un élément de fixation (24) sur le siège du véhicule automobile (14) (système de ceinture usuel).

5. Dispositif de sécurité selon la revendication 3 ou 4, **caractérisé en ce que** l'élément de fixation (24) est un élément de type tige (26).

6. Dispositif de sécurité selon l'une quelconque des revendications précédentes, **caractérisé en ce que** la boucle de ceinture (20) peut être connectée à l'élément de type tige (26) pouvant tourner sur son axe (52), de préférence par le biais d'un élément d'espacement (28).

7. Dispositif de sécurité selon l'une quelconque des revendications précédentes, **caractérisé en ce que** le dispositif de réglage en longueur du siège (12) présente au moins un rail (30) pour libérer le dispositif de réglage en longueur du siège (12).

8. Dispositif de sécurité selon l'une quelconque des revendications précédentes, **caractérisé en ce que** le siège du véhicule automobile (14) est disposé conjointement avec l'au moins un élément de logement (32) et l'élément de type tige (26) guidé dans l'élément de logement (32), sur l'au moins un rail (30) le long d'une direction de conduite (34).

9. Dispositif de sécurité selon la revendication 8, **caractérisé en ce que** l'élément de type tige (26) est disposé au-dessus du rail (30) dans au moins une ouverture (36) de l'élément de logement (32) transversalement à la direction de conduite (34).

10. Dispositif de sécurité selon l'une quelconque des revendications 8 ou 9, **caractérisé en ce qu'**au moins un élément de verrouillage (38) est disposé rigidement sur l'élément de type tige (26) dans la région de l'élément de logement (32).

11. Dispositif de sécurité selon l'une quelconque des revendications précédentes, **caractérisé en ce que** l'élément de verrouillage (38) est un cliquet d'arrêt (40).

12. Dispositif de sécurité selon la revendication 11, **caractérisé en ce que** le cliquet d'arrêt (40) vient en prise dans le rail (30) dans la position d'utilisation (44) du système de ceinture de sécurité (16) .

13. Dispositif de sécurité selon l'une quelconque des revendications 11 ou 12, **caractérisé en ce que** le cliquet d'arrêt (40) ne vient pas en prise dans le rail (30) dans la position de non utilisation (42) du système de ceinture de sécurité (16) (système de ceinture intégral et système de ceinture).

14. Dispositif de sécurité selon l'une quelconque des revendications 5 à 13, **caractérisé en ce que** l'on peut prédéfinir la position, en particulier un angle, du verrouillage de boucle de ceinture (18) par rapport à l'élément de type tige (26) pour le verrouillage du dispositif de réglage en longueur du siège (12).

15. Dispositif de sécurité selon l'une quelconque des revendications précédentes, **caractérisé en ce que** dans la position d'utilisation (44), le verrouillage de boucle de ceinture (18) adopte une position dans laquelle le verrouillage de boucle de ceinture (18) dépasse de la surface de la partie du siège (46) et/ou de la partie du dossier (48) du siège du véhicule automobile (14).
